# EUROPEAN PATENT APPLICATION

(11) **EP 1 956 566 A2**
(43) Date of publication of application: **13.08.2008**
(21) Application number: 08101183.5
(22) Date of filing: 31.01.2008
(51) Int. Cl.: G07F 7/10, G07F 19/00

(54) **Automatic teller machine (ATM) for banknote dispensing, electronic payments and bank operations**

(30) Priority: 07.02.2007 IT AQ20070002
(71) Applicant: Centoletti, Pietro, 67051 Avezzano (AQ) (IT); Pontone, Giovanni, 67051 Avezzano (AQ) (IT); Lombardinilo, Antonello, 66020 San Giovanni Teatino (CH) (IT); Antonini, Fabio, 67051 Avezzano (AQ) (IT); Caporale, Carlo, 67100 L'Aquila (IT)
(72) Inventor: Centoletti, Pietro, 67051 Avezzano (AQ) (IT); Pontone, Giovanni, 67051 Avezzano (AQ) (IT); Lombardinilo, Antonello, 66020 San Giovanni Teatino (CH) (IT); Antonini, Fabio, 67051 Avezzano (AQ) (IT); Caporale, Carlo, 67100 L'Aquila (IT)
(74) Representative: Baldi, Claudio

(57) **Abstract**

The present invention relates to an automatic teller machine for banknote dispenser, electronic payments and bank operations that comprises a digital finger print reader (4) used to read the user's finger prints, which are part of the authentication procedure, and an automatic teller machine (ATM) for banknote dispenser, electronic payments and bank operations.

## Description

The present invention relates to an automatic teller machine for banknote dispenser, electronic payments and bank operations, as claimed in claim 1.

Systems are currently known for automatic cash withdrawal from bank current accounts through dispensers connected in a telematic network, also in non-working hours and locations other than the head office of the bank where the current account is opened. In Italy, the said systems are defined with the "Bancomat", "Postamat" brands (owned by relevant holders), while in English-speaking countries the generic definition of Automated Teller Machine (ATM) is used.

Systems for electronic payment without cash are also known and generally defined as "credit cards".

The "card" is normally composed of a (usually plasticized) small card provided with a device to recognise the identification data of the card holder and issuing bank. For about thirty years, a magnetic band was applied to the card; in order to comply with safety requirements and because of increasing frauds, in 1993 a microchip was applied to the card, which is generally defined as "smart card". Compared to cards with magnetic band, which have limited storage capacity, Smart Cards can store more information and can be used for multiple services.

In general, if not otherwise specified, the term "card" is used herein to indicate credit cards, debit cards, and cards used to withdraw cash and make operations with Bancomat, Postamat, ATM and similar systems.

The operation of the said systems is based on the fact that the user is required to use the card with an authentication key entered with keyboard, such as a numerical (or alphanumerical) code known as PIN (Personal Identification Number).

In some cases, no PIN is entered and the user is required to sign a receipt (such as in the case of electronic payments by credit card).

An important advantage offered by these payment systems is the possibility to make electronic payments without having to carry cash; nevertheless, the disadvantages of the said system have contributed to increase the number of frauds.

For instance, a disadvantage of this payment method consists in the fact that authentication is extremely vulnerable to cloning since it only requires the PIN as authentication key.

Once they have acquired the card number, frauders acquire the PIN (for instance, using hidden video cameras to film the sequence of keys pressed by the user when entering the PIN on the keyboard) and "clone" the card to steal money.

The purpose of the invention is to find a remedy to the inconveniences of banknote dispensers and automatic teller machines with card by means of fixed or mobile machines as claimed in the first claim.

The present invention is based on an automatic teller machine (ATM) for banknote dispenser, electronic payments and bank operations in which the user is enabled to perform the said operations by means of a card authenticated with a univocal authentication key, in which the terminal comprises a microprocessor unit operatively associated to a card reader, and a finger print reader to read the user's finger prints, which are part of the authentication key.

Further advantageous characteristics are the subject of the enclosed claims.

The terminal of the present invention allows to withdraw cash and/or make electronic payments after the card is authenticated using the finger print in addition to or in replacement of the numerical or alphanumerical authentication code, or PIN.

The presence of an authentication key, partially consisting in the finger print of the card holder, contributes to guarantee protection against frauds, requiring the physical presence of the card holder in combination with the authorisation key: while the authentication key made of a numerical or alphanumerical code can be entered by anyone, an authentication key that is at least partially made of the finger print of the card user implies the physical presence of the card holder during the authentication process and is not subject to cloning, contributing in general to increase the security level of the card authentication procedure.

Another purpose of the present invention is to devise an automatic teller machine (ATM) for banknote dispenser, electronic payments and bank operations that comprises a terminal as illustrated above and a remote server used at least for the authentication procedures of the card entered in the terminal reader.

In general, the term "server" is used herein as synonym of processing unit, such as a computer, installed in remote position with respect to the terminal.

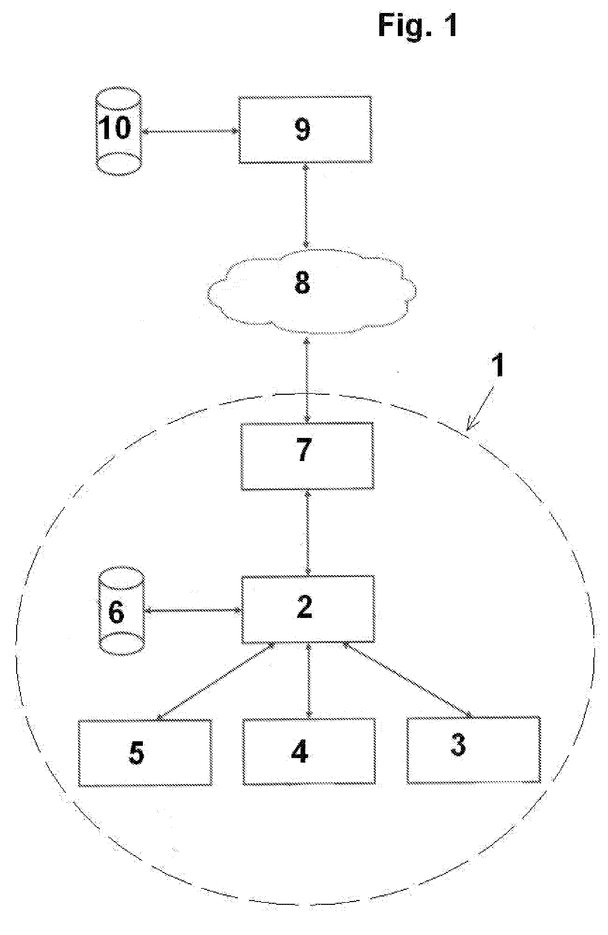

The invention and its advantages will become more evident with reference to the enclosed figure, which is a block diagram of the operating principle of the present invention.

The block diagram of the terminal and authentication system is illustrated in 1: The system is composed of a terminal (1) provided with microprocessor unit (2) operatively associated with three input devices: a card reader (3) (Bancomat, credit or debt cards, prepaid cards, etc.), a digital print reader (4) and a device (5) for insertion of alphanumerical or numerical codes (i.e. traditional PIN's).

In the terminal (1) of the invention the processing unit (2) is connected locally to a local file (6) of PIN's and/or finger prints to compare the PIN's and/or finger prints entered by the user and the ones stored in the local file (6) and authorise the card use if they match.

The terminal (1) is characterised by large flexibility of use; in fact, card authentication is carried out in different modes: either in a traditional mode, by inserting the card in the card reader (3) and entering an alphanumerical or numeric authentication key (PIN) using the device (5) for the insertion of the alphanumerical or numerical codes (as it happens normally), or alternatively the processing unit (2) authorises the card only if, as an alternative or in combination with the insertion of the numerical or alphanumerical key (PIN), also the finger print of the card holder is authenticated by the digital finger print reader (4) and compared with the finger print saved in the local file (6).

Advantageously, the system provides very rapid authentication, being based on the local connection between the processing unit (2), the local file (6) and the three input devices (3, 4 and 5).

As illustrated hereinafter, in some cases the local file (6) is not provided, and in this case the comparison between the finger prints and/or entered PIN and the reference ones is carried out according to different operating principles, as described below.

Obviously, the comparison between the digital finger prints provided by the user and the stored ones, and the comparison between the PIN entered by the user and the stored one is carried out by the processing unit (2) on information or similar data, by means of known technologies that are not described herein.

Moreover, the processing unit (2) can be provided with a communication system (7) for connection, through a communication network (8), to a remote server (9) connected to a remove file (10) of PIN's and/or finger prints.

The authentication procedure (that is to say the comparison between the PIN or the finger prints to determine the correspondence between the ones provided by the user and the stored ones for authentication purposes) can be entrusted to the remote server (9), rather than being implemented by the processing unit (2).

In such a case, the processing unit (2) detects the data coming from the input devices (3, 4 and 5) and transmits it to the remote server (9) over the communication system (7) that uses the communication network (8), and in such a case the terminal (1) is not provided with the local file (6).

In general, the terminal (1) can be of fixed or mobile type: a fixed terminal is a terminal integrated in a masonry structure or in a recessed space of a building, while a mobile terminal is a small terminal that can be handled and carried easily, and is not integrated or contained in a masonry structure.

For completeness purposes, it must be specified that fixed terminals include the electronic payment devices connected to remote server over fixed telecommunication networks (ADSL, ISDN, VDSL).

In case of a mobile terminal, the communication network (8) can be wireless, such as GSM, GPRS, EDGE, UMTS, HSDPA, IEE802.11a/b/g, WiMAX, ZigBee, UWB, IrDA, etc. In such a case the communication system (7) is wireless.

Typically, mobile terminals cannot be used to withdraw money due to their reduced dimensions and therefore mobile terminals can be used to carry out all bank operations that do not require cash withdrawal (such as payments for bills, shopping, control on current account operations, phone card recharging, prepaid card recharging, or similar operations).

According to an especially advantageous example of the mobile terminal, the mobile terminal is integrated into a mobile phone, handheld equipment or similar mobile device (possibly a dedicated one) and available to each single user, who can directly carry out operations on current accounts by means of card authentication with finger prints and possibly with traditional PIN, as if it was connected to a fixed terminal, except for cash withdrawal.

In case of wireless communication between the terminal and server, the privacy of transmitted information is guaranteed based on protection algorithms (cryptography) of known type, which in an especially advantageous embodiment of the present invention use the finger prints of the card holder as cryptographic key to ensure security; in such a way, when the connection between the terminal and server is established, a virtual private network is established in which the access and cryptographic keys are linked to the information coded in the finger print (or prints).

The wireless communication diagram is advantageously suitable and safe for a system that serves multiple users connected to the same service station (Bancomat, POS, ATM, etc.).

According to the system configuration, the finger print (or prints) and/or PIN of the card holder are associated with the card during the preliminary phase.

The PIN association mode is the one that is currently used by the issuing banks of the said cards.

The digital finger print is associated when the card is applied for or issued by reading the finger print (or prints) and saving it (or them) in a safe file managed by the issuing bank (for example, the remote (10) and/or local file (6)).

As mentioned above, the card is authenticated by comparing the digital finger print (or prints) and possibly by entering the PIN. The finger print (or prints) is verified by the finger print reader (4) (for example, reading is carried out by touching or rubbing the finger tip on the reader (4)).

In case of electronic cards or smart cards (as illustrated above), the finger print (or prints) can be stored in a safe portion of the card memory, thus improving the card use: in such a case, not only the digital finger print of the card holder is subjected to additional control, but the function of local file (6) is carried out by the card itself, in which the holder's finger print is stored.

The verification of the data with the data stored on the card is optional, if at least one local (6) and/or remote (9) file is provided and the need for it is configured when the user applies for and/or is issued the card.

The server (9) can be situated near the terminal (1) or in a remote location accessed by means of a safe connection.

The remote server (9) can be split in two different servers, for example to enable one server for PIN authentication and another server for finger print authentication.

Moreover, servers (9) can be replicated for reliability, service and other reasons.

The purpose of the invention is to guarantee the authentication of the card used for the transaction by means of finger print and/or PIN.

An authentication system of this type allows to avoid or minimise the risk of card cloning because the finger print reader will give a positive response only when the legitimate user provides his finger print (or prints) to the reader. For example, finger print readers will give a negative response if a copy (for example a photostat copy) of the finger print is provided.

## Claims

1. Automatic teller machine (ATM) (1) for banknote dispenser, electronic payments and bank operations, of the type in which the user is enabled to perform the said operations by a card authenticated with a univocal authentication key, in which the terminal comprises a microprocessor unit (2) operatively associated to a card reader (3), **characterised in that** the terminal (1) comprises a finger print reader (4) to read the user's finger prints, which are part of the authentication key

2. Terminal (1) as claimed in claim 1, which also comprises a device (5) for the insertion of a numerical or alphanumerical PIN, the said numerical or alphanumerical PIN being at least part of the authentication key.

3. Terminal (1) as claimed in claim 1 or 2, in which a microprocessor unit (2) is operatively connected to at least a file (6, 10) of PIN's and/or finger prints.

4. Terminal (1) as claimed in claim 3, in which a microprocessor unit (2) receives the information of the finger print provided by the user from the finger print reader (4) and compares it with the information of the finger print stored in the file (6, 10) to authorise the card use in case of correspondence.

5. Terminal (1) as claimed in claim 3, in which a microprocessor unit (2) receives the information of the finger print provided by the user from the finger print reader (4) and compares it with the information of the finger print stored in the file (6, 10) to authorise the card use in case of correspondence.

6. Terminal (1) as claimed in one or more of the above claims, in which at least one file (6) is a local file.

7. Terminal (1) as claimed in one or more of the above claims, which also comprises a communication system (7) for connection to a remote server (9) over a communication network (8).

8. Terminal (1) as claimed in claim 7, in which the communication system (7) and the communication network (8) are wireless, such as GSM, GPRS, EDGE, UMTS, HSDPA, IEE802.11a/b/g, WiMAX, ZigBee, UWB, IrDA, etc.

9. Automatic teller machine (ATM) for banknote dispenser, electronic payments and bank operations comprising a machine (1) as claimed in one or more of the above claims 1 to 8 and also comprising a remote server (9) connected to at least one remote file (10) of PIN's and/or finger prints.

10. System as claimed in claim 9, in which the processing unit (2) detects the data coming from the card reader (3) and/or the finger print reader (4) and/or the device (5) for insertion of a numerical or alphanumerical PIN and transmits it to the remote server (9) by means of the communication system (7) and the communication network (8), in which the remote server (9) compares the data sent by the processing unit (2) to check correspondence with the data stored in the remote file (10) for card authorisation purposes.

11. System as claimed in claim 10, in which the data transmitted between the terminal (1) and remote server (9) are cryptographed with protection algorithms that use the finger print as cryptographic key.

12. System as claimed in one or more of claims 9 to 11, also comprising a card with microchip and a non-volatile memory (so-called "smart card"), in which the non-volatile memory stores the data of the digital finger print (or prints) of the card holder.

13. System as claimed in one or more of claims 9 to 12, in which the terminal (1) is a fixed terminal, that is to say a terminal integrated into a masonry structure or contained in a recessed space of a building.

14. System as claimed in one or more of claims 9 to 12, in which the terminal (1) is a mobile terminal with reduced dimensions that can be handled and carried easily, and is not integrated or contained in a masonry structure.

15. System as claimed in claim 14, in which the mobile terminal is integrated into a mobile phone, handheld equipment or similar mobile device, including a dedicated one.
